# EUROPEAN PATENT APPLICATION

(11) **EP 3 903 595 A1**
(43) Date of publication of application: **03.11.2021**
(21) Application number: 19906132.6
(22) Date of filing: 26.12.2019
(51) Int. Cl.: A23F 3/16, A23L 2/38, A23L 2/52

(54) **CONTAINER-PACKED TEA BEVERAGE**

(30) Priority: 28.12.2018 JP 2018247877
(71) Applicant: Suntory Holdings Limited, Osaka 530-8203 (JP)
(72) Inventor: MUTOH, Mari, Kawasaki-shi, Kanagawa 211-0067 (JP); MATSUBAYASHI, Hideki, Kawasaki-shi, Kanagawa 211-0067 (JP); NAKATA, Aki, Kawasaki-shi, Kanagawa 211-0067 (JP)
(74) Representative: Vossius & Partner Patentanwälte Rechtsanwälte mbB
(86) International application number: PCT/JP2019/051084
(87) International publication number: WO 2020/138269

(57) **Abstract**

An object of the present invention is to provide a packaged tea beverage with reduced deterioration of aroma.

In a packaged tea beverage containing 1.0 to 50 mg/100 mL of caffeine, 1-deoxynojirimycin is incorporated at concentrations of from 0.1 to 2.0 mg/100 mL.

## Description

### TECHNICAL FIELD

The present invention relates to a packaged tea beverage containing a tea extract, and more particularly to a packaged tea beverage containing a specified amount of 1-deoxynojirimycin.

### BACKGROUND ART

Tea beverages are known as beverages whose flavor is significantly changed by heating. In particular, production processes for packaged tea beverages that are storable at ordinary temperatures require severe heat sterilization which causes deterioration of aroma inherent in tea, leading to significant deterioration of the flavor of tea beverages (NPL 1). Thus, there has been proposed a fermented or semi-fermented tea beverage having excellent aroma even after sterilization, which is produced by extracting fermented or semi-fermented tea leaves with cold water at lower than 10°C, extracting an extraction residue with warm water at 50°C or higher, mixing liquid extracts obtained at the previous two steps, and sterilizing a mixture of liquid extracts (PTL 1). Also, there has been proposed a green tea extract that allows production of packaged green tea beverages which suffer less deterioration of aroma during heat sterilization (PTL 2).

Meanwhile, 1-deoxynojirimycin is a piperidine alkaloid enriched in mulberry leaves or the like. Several reports have hitherto been published regarding tea beverages incorporating a mulberry leaf extract. For example, PTL 3 discloses a packaged beverage with reduced bitterness, comprising starch, high concentrations of non-polymeric catechins, and a mulberry leaf extract. It is also known that a tea beverage incorporating mulberry leaves and indigestible dextrin has been distributed as a commercial product (NPL 2; product name: *Otona No Calolimit -- Gyokuro-Tailored Green Tea Plus).* Further, it has been reported that blood glucose levels of rats were improved using a solution obtained by dissolving sucrose, high concentrations of 1-deoxynojirimycin and a flavonoid-containing green tea extract in water (PTL 4).

### CITATION LIST

### PATENT LITERATURES

PTL 1: Japanese Patent No. JP 3590029
PTL 2: Japanese Patent No. JP 5658918
PTL 3: Japanese Patent Publication No. JP 2011-087526
PTL 4: Japanese Patent Application No. JP H07-302444

### NON PATENT LITERATURES

NPL 1: Journal of the Japanese Society for Food Science and Technology, 2005, vol.52, no. 1, p.34-40
NPL 2: Website of Dydo Drinco, Incorporated ("Otona No Calolimit Tea Series", [searched on December 6, 2018], URL: https://www.dydo.co.jp/blendcha/)

### SUMMARY OF INVENTION

### TECHNICAL PROBLEM

An object of the present invention is to provide a packaged tea beverage with reduced deterioration of aroma.

### SOLUTION TO PROBLEM

The present inventors have made intensive studies to achieve the aforementioned object and, as a result, found that a specified amount of 1-deoxynojirimycin has a superior effect in reducing deterioration of the aroma of a tea beverage caused by heat sterilization or the like. Thus, the inventors have completed the present invention.

The present invention includes, but is not limited to, the following embodiments.
(1) A packaged tea beverage comprising a tea extract and 1-deoxynojirimycin, wherein the beverage has a 1-deoxynojirimycin content of from 0.1 to 2.0 mg/100 mL.
(2) The beverage as set forth in (1), wherein the beverage contains caffeine at a concentration of not less than 1.0 mg/100 mL.
(3) The beverage as set forth in (1) or (2), wherein the beverage has a caffeine content of not more than 50 mg/100 mL.
(4) The beverage as set forth in any of (1) to (3), wherein the tea extract comprises a green tea extract.
(5) A method for producing a packaged tea beverage comprising a tea extract and 1-deoxynojirimycin, the method including a heat sterilization step, wherein the method comprises adjusting the 1-deoxynojirimycin content of the beverage to be in the range of from 0.1 to 2.0 mg/100 mL, and adjusting the caffeine content of the beverage to not more than 50 mg/100 mL.
(6) A method for reducing deterioration of the aroma of a packaged tea beverage comprising a tea extract and 1-deoxynojirimycin caused by heat sterilization, wherein the method comprises adjusting the 1-deoxynojirimycin content of the beverage to be in the range of from 0.1 to 2.0 mg/100 mL, and adjusting the caffeine content of the beverage to not more than 50 mg/100 mL.

### ADVANTAGEOUS EFFECTS OF INVENTION

The present invention reduces deterioration of the aroma of a packaged tea beverage caused by heat sterilization or the like, and therefore, makes it possible to provide a packaged tea beverage having rich aroma and high palatability, which is storable at ordinary temperatures for a long period of time.

### DESCRIPTION OF EMBODIMENTS

One embodiment of the present invention is directed to a packaged tea beverage comprising a tea extract and 1-deoxynojirimycin, wherein the beverage has a 1-deoxynojirimycin content of from 0.1 to 2.0 mg/100 mL.

### (Tea extract)

The beverage of the present invention is a tea beverage containing a tea extract. As referred to herein, the "tea extract" refers to a product prepared by extraction of tea leaves with an extraction solvent. Examples of tea leaves include those selected from leaves of the genus *Camellia (e.g.,* the species *Camellia sinensis,* such as C. *sinensis* var. *sinensis* (including the variety *Yabukita*)*, C. sinensis* var. *assamica*) and hybrids thereof. Both of those tea leaves classified as non-fermented tea leaves (*e.g., Sencha* (brewed green tea), *Bancha* (coarse green tea), *Tencha* (non-ground tea leaves used for *Matcha*)*, Kamairi-cha* (pot-roasted green teas), *Kukicha* (twig tea), *Bocha* (roasted twig tea), *Mecha* (bud tea)), and those classified as fermented and semi-fermented tea leaves can be used. One type of tea leaves, or a combination of two or more types of them can be used.

As the tea extract, one type of a liquid tea extract or a concentrate thereof, or a combination of two or more types of liquid tea extracts or concentrates thereof can be used. As referred to herein, the "tea concentrate" refers to a product in which the concentrations of tea constituents are increased by removing part of solvent from a liquid tea extract. Examples of concentration techniques include, but are not limited to, ordinary pressure concentration, vacuum concentration, and membrane concentration. The tea concentrate may be in a liquid form or a solid (e.g., powder) form. A commercially available concentrated tea extract may be used. The tea extract may be a low-caffeine or caffeine-free extract obtained by removing caffeine present in tea.

### (Tea beverage)

The beverage of the present invention is a tea beverage containing a tea extract. As referred to in this invention, the "tea beverage" refers to a beverage prepared by incorporating the aforementioned tea extract, and specific examples thereof include green tea beverages, oolong tea beverages, black tea beverages, roasted tea beverages, and brown rice tea beverages. Among them, green tea beverages prepared with tea leaves classified as non-fermented tea leaves are one of preferred embodiments of this invention.

In one embodiment, the tea beverage of the present invention is a beverage comprising a tea extract as a primary component. The "beverage comprising a tea extract as a primary component" refers to a beverage in which the designation of tea, such as "tea", "green tea", "oolong tea", "jasmine tea", "black tea" or the like, is listed high on a list of ingredients labeled in accordance with the Food Labeling Act of Japan (effective on April 2015). The "beverage comprising a tea extract as a primary component" is preferably a beverage in which the designation of tea is listed first or second on a list of ingredients, more preferably a beverage in which the designation of tea is listed first on a list of ingredients.

The pH of the packaged tea beverage of the present invention is not particularly limited, but is preferably in the range of from 5.5 to 8.0, more preferably from 6.0 to 7.0, from the viewpoints of aroma and storage stability.

### (Caffeine)

The tea beverage of the present invention may not contain caffeine, but in a preferred embodiment contains caffeine. When caffeine is contained in the tea beverage of this invention, deterioration of the aroma of the tea beverage can be further reduced by the flavor (bitterness) inherent in caffeine. From the viewpoint that the action and effect of this invention are significantly exhibited, the tea beverage of this invention has a caffeine content of preferably not less than 1.0 mg/100 mL, more preferably not less than 5.0 mg/100 mL, still more preferably not less than 10 mg/100 mL. When the tea beverage of this invention has a caffeine content of more than 50 mg/100 mL, the bitterness inherent in caffeine may become too intense. From the viewpoint of flavor (bitterness), the tea beverage of this invention has a caffeine content of preferably not more than 40 mg/100 mL, more preferably not more than 30 mg/100 mL. Caffeine may be derived from a tea extract, or a commercially available caffeine preparation may be added. The caffeine content in the tea beverage of this invention can be quantified by a known method -- for example, caffeine content can be measured by high-performance liquid chromatography (HPLC).

### (1-Deoxynojirimycin)

The present invention is characterized by reducing deterioration of the aroma of a tea beverage by use of 1-deoxynojirimycin. 1-Deoxynojirimycin, which is an iminosugar found in mulberry leaves or the like, is also called moranoline or 1,5-dideoxy-1,5-imino-D-glucitol, and is assigned CAS Registry No. 19130-96-2.

The tea beverage of the present invention contains from 0.1 to 2.0 mg/100 mL of 1-deoxynojirimycin. When the tea beverage of this invention has a 1-deoxynojirimycin content of not less than 0.1 mg/100 mL, deterioration of aroma caused by heat sterilization or the like can be effectively reduced leading to improvement of the flavor of the tea beverage. The tea beverage of this invention has a 1-deoxynojirimycin content of preferably not less than 0.17 mg/100 mL, more preferably not less than 0.2 mg/100 mL.

It is known that sugar-like alkaloids such as 1-deoxynojirimycin have a disadvantage in that when they are added to foods and beverages, they may deteriorate the flavor of the foods and beverages (refer to paragraph [0003] of PTL 4). Further, as a result of studies made by the present inventors, it was found that tea beverages containing high concentrations of 1-deoxynojirimycin are more likely to leave an unpleasant aftertaste in the latter half of drinking time. As referred to herein, the "unpleasant taste" refers to a rough feeling on the tongue (hereinafter also referred to as "harsh aftertaste"). The harsh aftertaste of 1-deoxynojirimycin may impair the intended effect of the present invention, or namely the palatability of a good-flavored tea beverage felt upon drinking. From the viewpoint that the beverage gives an excellent clean sensation in the mouth and hardly leaves an unpleasant aftertaste, the upper limit of the 1-deoxynojirimycin content of the tea beverage of this invention is 2.0 mg/100 mL. The tea beverage of this invention has a 1-deoxynojirimycin content of preferably not more than 1.0 mg/100 mL, more preferably not more than 0.7 mg/100 mL. The 1-deoxynojirimycin content in the beverage can be quantified by a known method -- for example, 1-deoxynojirimycin content can be measured by HPLC.

The 1-deoxynojirimycin used in the present invention is not limited to those extracted or isolated from a mulberry plant or other plants. Substances produced by chemical synthesis or fermentation, or products produced by bacteria may also be used. Examples of commercially available products of 1-deoxynojirimycin include the product sold by Wako Pure Chemical Industries, Ltd.

In the present invention, 1-deoxynojirimycin can be used in the form of a plant extract from a mulberry plant or other plants. Examples of mulberry plants that can be used include *Morus bombycis* Koidzumi, *Morus alba* L., *Morus australis* Poir, *Morus latifolia* Poir., *Morus mongolica* Schneid, *Morus nigra* L., *Morus rubra* L., and *Morus boninensis* Koidzumi, and any hydbrids or variants thereof can also be used. The site of the plant to be used is not limited in any way -- leaves, branches, sprouts, barks, trunks, roots, root barks, flowers, syncarps and the like can be used. Examples of mulberry plant extracts include, but are not limited to, the mulberry leaf extract powder, sterilized mulberry leaf powder and the like produced by Toyotama Healthy Food Co., Ltd.

In the case of using a plant extract, it is preferable to use a plant extract with increased concentration of 1-deoxynojirimycin, in order to ensure that the action and effect of the present invention can be effectively obtained and that the palatability of the tea beverage is not impaired. The following presents an exemplary method for obtaining a mulberry leaf extract containing 1-deoxynojirimycin. First, an alcohol such as hydrous ethanol is added to a dry product of mulberry leaves to obtain an extract. Since 1-deoxynojirimycin is present only at low concentrations (about 0.1-0.2 wt.%) in dry mulberry leaves, extraction with an alcohol is preferred to achieve efficient extraction. The obtained liquid extract is treated in a centrifuge to remove insolubles, and is then vacuum concentrated to obtain a mulberry leaf extract. The thus-obtained mulberry leaf extract generally contains 1-deoxynojirimycin at a concentration of from 0.4 to 1 wt.%.

### (Other components)

According to the studies made by the present inventors, it is found that in low-sweetness beverages having a degree of sweetness reduced below a specified level, it is more likely that the harsh aftertaste of 1-deoxynojirimycin becomes prominent and that the complex flavor imparted by this component enables a more efficient reduction of deterioration of aroma caused by heat sterilization. Therefore, low-sweetness beverages are one of preferred modes of the tea beverage of the present invention, from the viewpoint that the action and effect of this invention can be significantly exhibited. As referred to herein, the "low-sweetness" beverages refer specifically to beverages having a degree of sweetness of not more than 2, preferably not more than 1.5, more preferably not more than 1, still more preferably not more than 0.5. As referred to herein, the "degree of sweetness" is a measure of the intensity of sweetness, and is expressed as a relative ratio of the sweetness of a beverage to that of 1 wt.% sucrose (at 20°C), which is taken as 1. The degree of sweetness of a beverage is determined by converting the content (percent concentration by weight) of each sweetness component contained in the beverage into a sucrose equivalent based on the relative ratio of the sweetness of each sweetness component to that of sucrose, which is taken as 1, and then by totaling the sucrose sweetness equivalents of all sweetness components contained in the beverage. The relative ratios of the sweetness of different sweetness components to that of sucrose, which is taken as 1, can be determined using a known sugar sweetness conversion table *(e.g.,* McMurry J., Organic Chemistry, 7th edition, p.988). Preferred examples of low-sweetness tea beverages are tea beverages prepared with no addition of a sweetness component. The "sweetness component" refers to a component that imparts sweetness, and specific examples thereof include: natural sweeteners, such as fructose, sugar, fructose-glucose syrup, glucose, maltose, sucrose, high-fructose syrup, sugar alcohol, oligosaccharide, honey, sugarcane squeeze (brown sugar syrup), starch syrup, stevia powder, stevia extract, *Momordica grosvenori* powder, *Momordica grosvenori* extract, licorice *(Glycyrrhiza glabra)* powder, licorice extract, *Thaumatococcus daniellii* seed powder, and *Thaumatococcus daniellii* seed extract; and artificial sweeteners, such as acesulfame-K, sucralose, neotame, aspartame, and saccharin.

The present invention reduces deterioration of the aroma of a tea beverage caused by heat sterilization. When the intensity of the aroma of a beverage is enhanced with the use of a flavorant, the beverage will have the desired intensity of aroma after heat sterilization. Therefore, beverages prepared without use of a flavorant are one of preferred embodiments of this invention, from the viewpoint that the action and effect of this invention can be significantly exhibited.

In addition to the aforementioned components, the tea beverage of the present invention may have other various additives optionally added thereto, to the extent that there is no deviation from the intended object of this invention. Examples of other various additives include pH adjustor, antioxidant, pigment, emulsifier, preservative, vitamin, essence, and quality stabilizer. Such additives can be used alone or in combination. From the viewpoints of aroma and storage stability, the pH of the packaged tea beverage of the present invention is preferably in the range of from 5.5 to 8.0, more preferably from 6.0 to 7.0.

### (Packaged beverage)

The package used for the packaged tea beverage of the present invention is not particularly limited, and any known packages can be used. Like in the case of common beverages, examples of the package used for the packaged tea beverage of this invention include molded packages mainly made of resins such as polyethylene terephthalate (so-called PET bottle), metal cans, paper packages combined with metallic foils or plastic films, and glass bottles. The beverage of this invention can be provided in a form packed and sealed in such a package. The volume of the packaged tea beverage of this invention is not particularly limited, and is for example in the range of from 350 mL to 1000 mL, preferably from 500 mL to 1000 mL.

As mentioned above, the present invention effectively reduces deterioration of the aroma of a packaged tea beverage. In a preferred embodiment of this invention, the tea beverage of this invention is a packaged tea beverage prepared through heat sterilization. The heat sterilization conditions adopted in this invention can be, for example, those conditions having similar effects to those of the conditions stipulated in the Food Sanitation Act of Japan, and can be specifically set to the following conditions: at a temperature of from 60 to 150°C, preferably from 90 to 150°C, more preferably from 110 to 150°C, for a period of from 1 second to 60 minutes, preferably from 1 second to 30 minutes.

When the tea beverage is produced using a heat-resistant package (e.g., metal can, glass bottle), the beverage should be treated by retort sterilization (at 110 to 140°C for 1 minute to several tens of minutes). When the beverage is produced using a non-heat-resistant package *(e.g.,* PET bottle, paper package), a prepared liquid can, for example, be first sterilized at high temperatures for a short period of time using a plate-type heat exchanger or the like (UHT sterilization at 110 to 150°C for 1 second to several tens of seconds) and cooled to a specified temperature, and then packed in the package.

### EXAMPLES

Hereunder, the present invention will be specifically described in detail by way of working examples, but this invention is not limited to these examples. Unless otherwise stated herein, all numerical ranges are inclusive of their endpoints.

### Quantification of different components

Caffeine and 1-deoxynojirimycin present in different samples were quantified according to the procedures detailed below.

### <Analysis of caffeine>

The caffeine content in different tea beverages was analyzed using HPLC (high-performance liquid chromatography). The analysis was made using a HPLC analysis system (equipped with a system controller (CBM-20A), a PDA detector (SPD-M20Avp), a pump (LC-30AD), a degasser (DGU-20A5R), a column oven (CTO-20AC), and an autosampler (SIL-30AC), all of which are produced by Shimadzu Corporation). Tea beverages were measured as they were without dilution.

### HPLC analysis conditions:

- Column: TSK-gel ODS-80Ts QA (4.6 mm I.D. × 150 nm); produced by Tosoh Corporation
- Column temperature: 40°C
- Mobile phase:
   Solution A: Aqueous solution of 0.1% formic acid
   Solution B: Aqueous solution of 0.1% formic acid/acetonitrile
- Gradient conditions (% by volume)
   5% Solution B in 0 min.; 20% Solution B in 19 min.; 63% Solution B in 20 min.; 63% Solution B in 25 min.; 5% Solution B in 26 min.; 5% Solution B in 36 min.
- Flow rate: 1.0 mL/min.
- Sample injection volume: 10 µL
- Measurement wavelength: 280 nm
- Reference standard: Caffeine (produced by Nacalai Tesque, Inc.)

### <Analysis of 1-deoxynojirimycin>

The 1-deoxynojirimycin content in different tea beverages was analyzed using HPLC (high-performance liquid chromatography). The tea beverages were vacuum concentrated, if necessary, before analysis.

### HPLC analysis conditions

- Column: TSKgel Amide-80, ϕ4.6 mm × 250 mm, particle size 5 µm
- Mobile phase: Mixed solution of water, acetonitrile and acetic acid
- Flow rate: 1.0 mL/min.
- Column temperature: 40°C
- Ionization method: Electrospray ionization (positive ion detection mode)
- Mass-to-change ratio (m/z): 164.0 **→** 109.9

### Experiment 1: Preparation and evaluation of green tea beverages (reference examples)

A green tea beverage obtained by dissolving 0.4 g of Mitsui Meicha low-caffeine green tea in 100 mL of hot water (at 80 to 90°C) was packed in a can package and heat sterilized at 130°C for 1 minute to prepare a packaged green tea beverage (Sample 1-1).

Next, 20 g of green tea leaves were extracted with 1000 mL of hot water (at 80 to 90°C) for 5 minutes. Then, after the tea leaves were separated, the liquid was further passed through a 200-mesh sieve to remove solids such as ground tissues and tea particles, thereby obtaining a liquid green tea extract. To the obtained liquid green tea extract, water and caffeine were added so as to prepare different green tea beverages with caffeine contents of from 1.0 to 50 mg/100 mL. The prepared green tea beverages were packed in can packages and heat sterilized at 130°C for 1 minute, thereby to prepare different packaged green tea beverages (Samples 1-2 to 1-6).

The prepared packaged green tea beverages were subjected to sensory evaluation on deterioration of aroma after sterilization, which was rated by three panelists in the three-point rating scale from 1 to 3 points. To be specific, the ratings given by each panelist based on the following criteria were discussed again in a free-form manner among all the panelists, and the final ratings were assigned as integer values in consensus among them.
- 3 points: Significant deterioration of aroma is felt
- 2 points: Deterioration of aroma is felt
- 1 point: Little deterioration of aroma is felt

The results of the sensory evaluation are shown in Table 1. Deterioration of aroma caused by heat sterilization was more or less observed in all the green tea beverages regardless of their caffeine content.

**[Table 1]**

| Sample (reference example) | 1-1 | 1-2 | 1-3 | 1-4 | 1-5 | 1-6 |
|---|---|---|---|---|---|---|
| Amount added of low-caffeine green tea powder (mg/100 mL) | 400 | -- | -- | -- | -- | -- |
| Amount added of liquid green tea extract (ml/100 mL) | -- | 2.5 | 25 | 50 | 75 | 75 |
| Caffeine content (mg/100 mL) | 0 | 1 | 10 | 20 | 30 | 50 |
| 1-Deoxynojirimycin content (mg/100 mL) | 0 | 0 | 0 | 0 | 0 | 0 |
| Sensory rating | 2 | 2 | 3 | 3 | 3 | 3 |

### Experiment 2: Preparation and evaluation of green tea beverages (1)

Different packaged green tea beverages were prepared by adding 1-deoxynojirimycin to the green tea beverages with different caffeine contents as obtained in Experiment 1 and heat sterilizing the prepared liquids by the same procedure as in Experiment 1. The 1-deoxynojirimycin product used was a synthetic product of 1-deoxynojirimycin (with a purity of 98%) produced by Wako Pure Chemical Industries, Inc. The 1-deoxynojirimycin contents of the different samples are as shown in the table given below.

The prepared packaged green tea beverages were subjected to sensory evaluation by three panelists in the 5-point rating scale from 1 to 5 points. Also, those beverage samples of comparative examples, which contained caffeine at the same concentration as the beverage samples of working examples but did not contain 1-deoxynojirimycin, were prepared as controls and evaluated by the same procedure. The ratings given by each panelist based on the following criteria were discussed again in a free-form manner among all the panelists, and the final ratings were assigned as integer values in consensus among them.
- 5 points: Deterioration of aroma is significantly improved
- 4 points: Deterioration of aroma is improved
- 3 points: Deterioration of aroma is improved in some degree
- 2 points: Deterioration of aroma is almost not improved
- 1 point: Deterioration of aroma is not improved at all

The results of the sensory evaluation are shown in Table 2. Deterioration of aroma caused by heat sterilization was reduced by adding 1-deoxynojirimycin to green tea beverages. Merely by adopting the simple approach of adding 1-deoxynojirimycin to green tea beverages, the aroma of the green tea beverages was prevented from deteriorating due to heating. Additionally, with regard to Sample 2-18, which had a caffeine content of 80 mg/100 mL, the characteristic taste of caffeine became more intense.

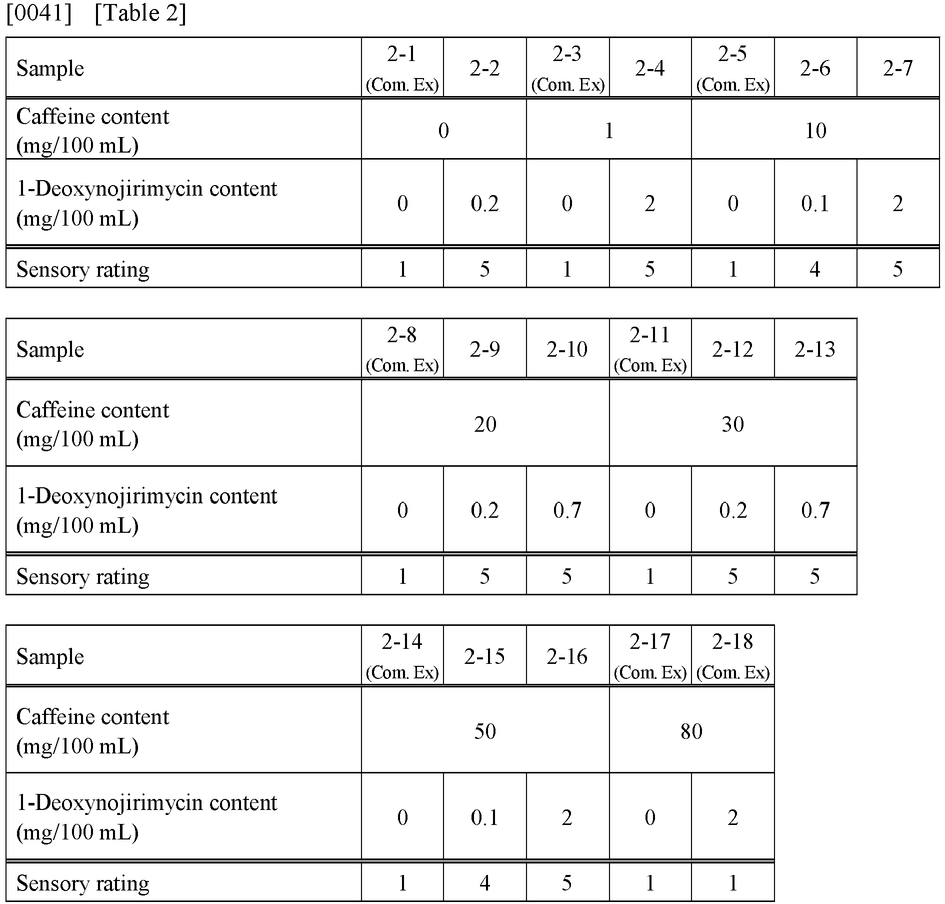

### Experiment 3: Preparation and evaluation of green tea beverages (2)

Different packaged green tea beverages were prepared by adding different concentrations of 1-deoxynojirimycin to the liquid green tea extract with a caffeine content of 10 mg/100 mL as obtained in Experiment 1 and heat sterilizing the prepared liquids by the same procedure as in Experiment 1. The 1-deoxynojirimycin product used was a synthetic product of 1-deoxynojirimycin (with a purity of 98%) produced by Wako Pure Chemical Industries, Inc. The 1-deoxynojirimycin contents of the different samples are as shown in the table given below.

The sensory evaluation was carried out by the same procedure as in Experiment 2. The results are shown in Table 3. As evident from the table, when 1-deoxynojirimycin was added to green tea beverages at concentrations of not less than 0.1 mg/100 mL, preferably not less than 0.17 mg/100 mL, before heat sterilization, deterioration of aroma caused by heat sterilization was reduced in a satisfactory manner.

Additionally, with regard to Sample 3-12, which had a 1-deoxynojirimycin content of 3.0 mg/100 mL, deterioration of aroma caused by heating was reduced by addition of 1-deoxynojirimycin, but the harsh aftertaste of 1-deoxynojirimycin, which was a rough feeling lingering on the tongue, was significantly felt which resulted in deterioration of the palatability of the green tea beverage.

**[Table 3]**

| Sample | 3-1 (Com. Ex) | 3-2 | 3-3 | 3-4 | 3-5 | 3-6 |
|---|---|---|---|---|---|---|
| Caffeine content (mg/100 mL) | 10 | | | | | |
| 1-Deoxynojirimycin content (mg/100 mL) | 0 | 0.1 | 0.15 | 0.17 | 0.2 | 0.3 |
| Sensory rating | 1 | 4 | 4 | 5 | 5 | 5 |
| | | | | | | |

| Sample | 3-7 | 3-8 | 3-9 | 3-10 | 3-11 | 3-12 (Com. Ex) |
|---|---|---|---|---|---|---|
| Caffeine content (mg/100 mL) | 10 | | | | | |
| 1-Deoxynojirimycin content (mg/100 mL) | 0.4 | 0.6 | 0.7 | 1.0 | 2.0 | 3.0 |
| Sensory rating | 5 | 5 | 5 | 5 | 5 | 5 |

### Experiment 4: Preparation and evaluation of green tea beverages (3)

A packaged green tea beverage was prepared by the same procedure as in Experiment 3, except that addition of 1-deoxynojirimycin was followed by further addition of ascorbic acid and sodium hydrogen carbonate. To be specific, after 1-deoxynojirimycin was added to the liquid green tea beverage with a caffeine content of 10 mg/100 mL as obtained in Experiment 1, ascorbic acid was added to a concentration of 30 mg/100 mL, and then sodium hydrogen carbonate was added to adjust the pH of the beverage. The green tea beverage obtained after heat sterilization had a sodium content of 8.0 mg/100 mL and a pH of 6.0.

The sensory evaluation was carried out by the same procedure as in Experiment 2. The results are shown in Table 4. As evident from the table, also in the packaged green tea beverage prepared with addition of ascorbic acid and sodium hydrogen carbonate, deterioration of aroma caused by heat sterilization, etc. was reduced in a satisfactory manner according to the present invention.

**[Table 4]**

| Sample | 4-1 (Com. Ex) | 4-2 | 4-3 |
|---|---|---|---|
| Caffeine content (mg/100 mL) | 10 | | |
| 1-Deoxynojirimycin content (mg/100 mL) | 0 | 0.2 | |
| Ascorbic acid content (mg/100 mL) | 0 | 0 | 30 |
| Sodium content (mg/100 mL) | 0 | 0 | 8.0 |

### Experiment 5: Preparation and evaluation of oolong tea beverages

Oolong tea beverages were also prepared in the same way to verify the effect of 1-deoxynojirimycin to reduce deterioration of aroma. As a first step, an oolong tea leaf extract was prepared. 5 g of oolong tea leaves were extracted with 700 mL of hot water (at 80 to 90°C) for 5 minutes. Then, the tea leaves were separated, the liquid was further passed through a 200-mesh sieve to remove solids such as ground tissues and tea particles, thereby obtaining a liquid oolong tea extract. To the obtained liquid extract, caffeine and 1-deoxynojirimycin were added so as to prepare different oolong tea beverages with a caffeine content of 10 mg/100 mL and 1-deoxynojirimycin contents of 0.2 to 1.0 mg/100 mL. The prepared oolong tea beverages were heat sterilized by the same procedure as in Experiment 1, thereby to prepare different packaged oolong tea beverages.

The sensory evaluation was carried out by the same procedure as in Experiment 2. The results are shown in Table 5. As evident from the table, also in the case where 1-deoxynojirimycin was added to oolong tea beverages at concentrations of not less than 0.1 mg/100 mL, preferably not less than 0.2 mg/100 mL, deterioration of aroma caused by heat sterilization, etc. was reduced in a satisfactory manner.

**[Table 5]**

| Sample | 5-1 (Com. Ex) | 5-2 | 5-3 | 5-4 |
|---|---|---|---|---|
| Caffeine content (mg/100 mL) | 10 | | | |
| 1-Deoxynojirimycin content (mg/100 mL) | 0 | 0.2 | 0.4 | 1.0 |
| Sensory rating | 1 | 5 | 5 | 5 |

## Claims

1. A packaged tea beverage comprising a tea extract and 1 -deoxynojirimycin, wherein the beverage has a 1-deoxynojirimycin content of from 0.1 to 2.0 mg/100 mL and a caffeine content of not more than 50 mg/100 mL.

2. The beverage according to claim 1, wherein the beverage is a green tea beverage or an oolong tea beverage.

3. The beverage according to claim 1 or 2, wherein the beverage has a 1-deoxynojirimycin content of not less than 0.17 mg/100 mL.

4. The beverage according to any of claims 1 to 3, wherein the beverage contains caffeine at a concentration of not less than 1.0 mg/100 mL.

5. The beverage according to any of claims 1 to 4, wherein the tea extract comprises a green tea extract.

6. A method for producing a packaged tea beverage comprising a tea extract and 1-deoxynojirimycin, the method including a heat sterilization step, wherein the method comprises adjusting the 1-deoxynojirimycin content of the beverage to be in the range of from 0.1 to 2.0 mg/100 mL, and adjusting the caffeine content of the beverage to not more than 50 mg/100 mL.

7. A method for reducing deterioration of the aroma of a packaged tea beverage comprising a tea extract and 1-deoxynojirimycin caused by heat sterilization, wherein the method comprises adjusting the 1-deoxynojirimycin content of the beverage to be in the range of from 0.1 to 2.0 mg/100 mL, and adjusting the caffeine content of the beverage to not more than 50 mg/100 mL.
